(19) Europäisches Patentamt
European Patent Office
Office européen des brevets

(11) **EP 3 309 996 B1**

(12) **EUROPEAN PATENT SPECIFICATION**

(45) Date of publication and mention
of the grant of the patent:
**08.12.2021 Bulletin 2021/49**

(51) Int Cl.:
***G06Q 20/06*** *(2012.01)*     ***G06Q 20/10*** *(2012.01)*
***G06Q 20/38*** *(2012.01)*     ***H04L 9/08*** *(2006.01)*

(21) Application number: **17171173.2**

(22) Date of filing: **15.05.2017**

(54) **SELECTIVE SIGNATURE SYSTEM**

SELEKTIVES UNTERSCHRIFTENSYSTEM

SYSTÈME DE SIGNATURE SÉLECTIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.10.2016 US 201615291053**

(43) Date of publication of application:
**18.04.2018 Bulletin 2018/16**

(73) Proprietor: **Fujitsu Limited
Kawasaki-shi, Kanagawa 211-8588 (JP)**

(72) Inventors:
- **MANDAL, Avradip
Sunnyvale, CA 94085 (US)**
- **MONTGOMERY, Hart
Sunnyvale, CA 94085 (US)**
- **ROY, Arnab
Sunnyvale, CA 94085 (US)**

(74) Representative: **Haseltine Lake Kempner LLP
Cheapside House
138 Cheapside
London EC2V 6BJ (GB)**

(56) References cited:
**US-A1- 2015 287 026    US-A1- 2015 324 787
US-A1- 2016 112 456**

- **BELLARE MIHIR ET AL: "Policy-Based
Signatures", 26 March 2014 (2014-03-26),
INTERNATIONAL CONFERENCE ON FINANCIAL
CRYPTOGRAPHY AND DATA SECURITY;
[LECTURE NOTES IN COMPUTER SCIENCE;
LECT.NOTES COMPUTER], SPRINGER, BERLIN,
HEIDELBERG, PAGE(S) 520 - 537, XP047465172,
ISBN: 978-3-642-17318-9 * the whole document ***

**Description**

FIELD

The embodiments discussed herein are related to selective signature systems.

BACKGROUND

So-called smart devices may have the capability to connect to a network and interact with other devices and systems. For example, smart devices may interact with other devices on a local network and/or with remote systems such as internet-based commerce sites or the like. These smart devices with network capabilities may be described as internet of things (IoT) devices. US2015324787A1 discloses a system for policy-based control and augmentation of cryptocurrency security including policy rules that govern transactions that are embedded in the cryptocurrency transmission.

The subject matter claimed herein is not limited to embodiments that solve any disadvantages or that operate only in environments such as those described above. Rather, this background is only provided to illustrate one example technology area where some embodiments described herein may be practiced.

SUMMARY

The invention is defined in the independent claims. Optional embodiments are set out in the dependent claims.

The object and advantages of the embodiments will be realized and achieved at least by the elements, features, and combinations particularly pointed out in the claims.

It is to be understood that both the foregoing general description and the following detailed description are exemplary and explanatory and are not restrictive of the claims.

The invention is defined by the appended claims.

BRIEF DESCRIPTION OF THE DRAWINGS

Example embodiments will be described and explained with additional specificity and detail through the use of the accompanying drawings.

Figure 1 is a diagram of an example environment for an example selective signature system.
Figure 2 is a flowchart of an example method.
Figure 3 is a block diagram illustrating an example computing device.

DESCRIPTION OF EMBODIMENTS

Internet of things (IoT) devices may employ a network connection to enhance the capabilities of the devices. In some instances, the enhanced capabilities may involve initiating a transfer of money. For example, an IoT lightbulb may sense that it is nearing the end if its lifecycle and may order a replacement lightbulb via the internet. An IoT washing machine may monitor the use of laundry detergent and fabric softener and may order replacement laundry detergent and fabric softener. An IoT refrigerator may monitor the consumption of foods and beverages and may order additional food and beverage.

In some configurations, IoT devices may employ a digital currency system, a virtual currency system, a cryptocurrency system, or the like or any combination thereof (referenced collectively herein as "digital currency") to pay for purchases. By way of example, the IoT devices may pay for purchases using bitcoins or the like. However, such devices may be targeted by thieves. For example, hackers may attempt to gain access to the device to instruct the device to transfer digital currency to the hackers. Thus, for example, allowing devices to initiate digital currency transfers in digital currency systems may create technical problems, such as security problems, for digital currency systems and for IoT device creators.

Some embodiments may include a selective signature system employing selective signature keys. The functionality of the selective signature keys may be restricted. For example, the selective signature keys may be used to sign only messages consistent with an associated policy. In some configurations, the selective signature keys may be used with a digital currency blockchain to restrict transfers of digital currency to approved parties. For example, the policy associated with the selective signature keys may allow for messages that initiate transfers to approved parties to be signed and may not allow messages that initiate transfers to non-approved parties to be signed.

Thus, for example, IoT devices employing the selective signature system may be less attractive to thieves and/or hackers, as there may be little to gain by hacking the device. For example, an IoT lightbulb may only be able to initiate digital currency transfers with lightbulb vendors, an IoT washing machine may only be able to initiate digital currency transfers with laundry detergent and fabric softener vendors, and/or an IoT refrigerator may only be able to initiate digital currency transfers with grocery stores.

In some embodiments, the selective signature system may be implemented without a central authority or other third-party to delegate signature keys.

Embodiments will be explained with reference to the accompanying drawings.

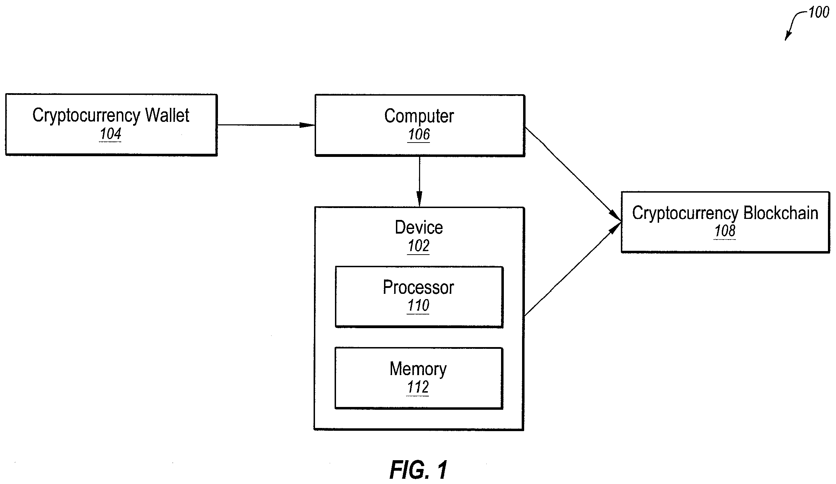

Figure 1 is a diagram of an example environment 100 for an example selective signature system. The environment 100 may include an IoT device 102. The device 102 may include any network-connected device or any so-called smart device. For example, the device 102 may include a network-connected home appliance, such as a network-connected washing machine, dryer, refrigerator, coffee machine, dishwasher, lightbulb, thermostat, virtual assistant, smoke detector, security system, irrigation control system, baby monitor, power switch, sound system, or the like.

The device 102 may communicate with a local network and/or a computer 106, a digital currency blockchain 108, other devices, the World Wide Web, or the like via a network such as the internet. The computer 106 may include a server, desktop computer, a laptop computer, a tablet computer, a mobile phone, a hardware cryptocurrency wallet, or the like or any combination thereof. The device 102 may be configured to order goods or services. The device 102 may be configured to order consumable goods when supplies get low or are exhausted. For example, the device 102 may order laundry detergent, fabric softener, dryer sheets, food, beverages, air filters, coffee filters, water filters, replacement batteries, replacement light bulbs, or the like.

In some embodiments, the device 102 may be configured to pay for ordered goods and services via a digital currency. For some digital currencies, the device 102 may initiate a digital currency transfer via an associated digital currency system. For example, the device 102 may pay for ordered goods and services using bitcoins. The digital currency system may utilize a blockchain 108. In some configurations, the blockchain may be managed by a decentralized group of computers and servers.

A digital currency, such as bitcoins, may be associated with a wallet 104. The wallet 104 may belong to, or be in control of, an owner of the device 102. The wallet 104 may allow a user to initiate a transfer of the associated digital currency. For example, the wallet 104 may generate private keys for use with the digital currency system, store the private keys, monitor incoming transactions, authorize transactions, or the like or any combination thereof. The wallet 104 may be stored on and/or run by the computer 106. The wallet 104 may be stored on the computer 106 locally, such as on a user's desktop computer, laptop computer, mobile device, or the like. Alternately or additionally, the wallet 104 may be stored on the computer 106 remotely, such as on a server, an online service, or the like. Alternately or additionally, the wallet 104 may be stored on a wallet device including hardware and/or software dedicated to storing and/or running the wallet 104.

The device 102 may also be configured to initiate a transfer of the associated digital currency. In some embodiments, the device 102 may be given selective keys. A policy may be associated with the selective keys. The policy may restrict the messages that the device 102 may sign. For example, the policy may include a list of authorized digital currency addresses to which the device is authorized to send digital currency. Thus, for example, the policy may restrict the digital currency transactions that the device 102 may initiate. The policy may be set to allow the device 102 to sign messages consistent with the operation of the device 102. For instance, the policy, and by extension, the selective keys provided to the device 102 may allow the device to initiate a digital currency transfer with particular accounts, particular entities, and/or particular people, such as trusted vendors of products related to the operation of the device.

In some embodiments, a selective signature system may include a key generation algorithm, which may be represented by *KeyGen.* The selective signature system may include a selective key generation algorithm, which may be represented by *SelKeyGen.* The selective signature system may include a signing algorithm, which may be represented by *Sign.* The selective signature system may include a verification algorithm, which may be represented by *Verify.* The algorithms may be represented as follows:

$$KeyGen(\lambda) \rightarrow (msk, mvk)$$

$$SelKeyGen(msk, p) \rightarrow (sk_p, vk_p)$$

$$Sign(sk_p, m, p) \rightarrow \sigma$$

$$Verify(mvk, vk_p, p, m, \sigma) \rightarrow valid/invalid$$

The key generation algorithm may input a security parameter, which may be represented by $\lambda$. The key generation algorithm may output a master secret key and a master verification key, which may be represented by *msk* and *mvk,* respectively. The master secret key may correspond to a private key and the master verification key may correspond to a public key.

The selective key generation algorithm may input the master secret key and a policy, which may be represented *by p.* The selective key generation algorithm may output a selective secret key and a selective verification key, which may be represented by $sk_p$ and $vk_p$, respectively. The selective secret key and the selective verification key may be described as policy-infused secret keys. For example, the selective secret key and the selective verification key may be based on the master secret key and the policy. The selective secret key may correspond to a private key and the master verification key may correspond to a public key.

The signing algorithm may input the selective secret key, a message, which may be represented by *m*, and the policy. The signing algorithm may output a signature, which may be represented by $\sigma$. In some embodiments, the signature may correspond to a tuple of the message and the policy, which may be represented by *(m,p),* encrypted using the selective secret key.

The verification algorithm may input the master verification key, the selective verification key, the policy, the message, and the signature. The verification algorithm may output a *valid* message indicating that the inputs resulted in verification or may output an *invalid* message indicating that the inputs did not result in verification. The verification algorithm may output *valid* in response to the master verification key, the selective verification key, the policy, the message, and the signature being validly created using *KeyGen, SelKeyGen,* and *Sign,* as well as the message being consistent with the policy.

The verification algorithm may output *invalid* in response to any of the master verification key, the selective verification key, the policy, the message, and/or the signature not being validly created using *KeyGen, SelKeyGen,* and *Sign.* An adversary may not feasibly generate a valid signature on a message-policy tuple without access to the secret key corresponding to the policy.

The verification algorithm may also output *invalid* in response to the message being inconsistent with the policy. An adversary with access to the secret key corresponding to the policy may be restricted to employing messages consistent with the policy to generate a valid signature. If the policy limits messages to initiating transfers to particular addresses, the adversary may not initiate a transfer to itself unless it is associated with one of the particular addresses. Thus, for example, the adversary may not create a valid message initiating a transfer to an address it controls when the policy limits messages to addresses associated with particular vendors.

In some embodiments, *KeyGen, SelKeyGen, Sign,* and *Verify* may be based, in part, on a standard signature scheme. For example, *KeyGen, SelKeyGen, Sign,* and *Verify* may employ, in part, algorithms used by an associated digital currency, such as algorithms used for bitcoin transactions. In some embodiments, *KeyGen, SelKeyGen, Sign,* and *Verify* may employ a standard key generation algorithm, a standard signing algorithm, and a standard verification algorithm, which may be represented by *KeyGen$_{standard}$, Sign$_{standard}$,* and *Verify$_{standard}$,* respectively. The standard algorithms may be represented as follows:

$$KeyGen_{standard}(\lambda) \rightarrow (sk, vk)$$

$$Sign_{standard}(sk, m) \rightarrow \sigma_m$$

$$Verify_{standard}(vk, m, \sigma_m) \rightarrow valid/invalid$$

The standard key generation algorithm may input a security parameter. The security parameter may correspond generally to the security parameter of *KeyGen,* described above. The standard key generation algorithm may output a secret key and a verification key, which may be represented by *sk* and vk, respectively. The secret key may correspond to a private key and the verification key may correspond to a public key.

The standard signing algorithm may input the secret key and a message. The message may correspond generally to the message *m* described above. The signing algorithm may output a signed message corresponding to the message *m* encrypted using the secret key, which may be represented by $\sigma_m$.

The standard verification algorithm may input the verification key, the message, and the signed message. The standard verification algorithm may output a *valid* message indicating that the inputs resulted in verification or may output an *invalid* message indicating that the inputs did not result in verification. The inputs may be verified where the signed message was encrypted using the secret key corresponding to the verification key used in the standard verification algorithm.

In some embodiments, the key generation algorithm of the selective signature system may be represented as follows:

$$KeyGen(\lambda) \rightarrow (msk, vk)$$

where

$$KeyGen_{standard}(\lambda) \rightarrow (sk, vk); msk = sk; vsk = vk$$

For example, the standard key generation algorithm may be employed to generate a secret key and a verification key, which may be set as the master secret key and the master verification key, respectively.

Alternately or additionally, the selective key generation algorithm of the selective signature system may be represented as follows:

$$SelKeyGen(msk, p) \rightarrow (sk_p, vk_p)$$

where

$$KeyGen_{standard}(\lambda) \rightarrow sk', vk'; sk_p = sk'; vk_p = (\sigma_p, vk')$$

and

$$Sign_{standard}(msk, (p, vk')) \rightarrow \sigma_p$$

The selective secret key and the selective verification key, respectively represented by $sk_p$ and $vk_p$, may incorporate the policy within the selective verification key, as indicated by the p subscript. In some embodiments, an initial set of keys, described as raw keys, may be generated and used as a basis for policy-infused selective keys. Thus, for example, the policy may be provided through the selective verification key. In some embodiments, the standard key generation algorithm may be employed to generate a raw selective secret key and a raw selective verification key, represented by *sk'* and *vk'*, respectively. The raw selective secret key and the raw selective verification key may be so-described to differentiate from the policy-infused selective secret and verification keys. In some embodiments, the raw selective secret key may be set as the selective secret key. For example, the policy-infused selective secret key may be equal to the raw selective secret key. A tuple of the policy and the raw selective verification key, represented by *(p,vk')*, may be encrypted using the master secret key via the standard signing algorithm. The resulting signed policy-raw selective verification key tuple may be represented by $\sigma_p$. A tuple of the signed policy-raw selective verification key tuple and the raw selective verification key, represented by *(σ_p,vk')*, may be set as the selective verification key.

Alternately or additionally, the signing algorithm of the selective signature system may be represented as follows:

$$Sign(sk_p, m, p) \rightarrow \sigma$$

where

$$Sign_{standard}(sk_p, (m, p)) \rightarrow \sigma_{(m,p)}; \sigma = \sigma_{(m,p)}$$

For example, a tuple of the message and the policy, represented by *(m,p)*, may be encrypted using the selective secret key via the standard signing algorithm. The resulting signed message-policy tuple may be represented by $\sigma_{(m,p)}$. The signed message-policy tuple may be set as the signature of the selective signature system.

Alternately or additionally, the verification algorithm of the selective signature system may be represented as follows:

$$Verify\big(mvk, vk_p, p, m, \sigma\big) \to valid/invalid$$

where

$$Verify_{standard}\big(mvk, (p, vk'), \sigma_p\big) \to valid_{mkey}/invalid_{mkey}$$

$$\text{if } valid_{mkey}, p(m) \to valid_{message}/invalid_{message}$$

$$\text{if } valid_{message}, Verify_{standard}(vk', (m, p), \sigma) \to valid_{skey}/invalid_{skey}$$

$$\text{if } valid_{skey} \to valid$$

$$\text{if } invalid_{mkey}, invalid_{message}, \text{ or } invalid_{skey} \to invalid$$

For example, the policy-raw selective verification key tuple and the signed policy-raw selective verification key tuple may be verified against the master verification key via the standard verification algorithm. If the resulting verification, which may be represented by $valid_{mkey}/invalid_{mkey}$, is valid, the message may be checked against the policy, which may be represented by $p(m)$. If the message is consistent with the policy, the message may be deemed valid, with may be represented by $valid_{message}$. If the message is inconsistent with the policy, the message may be deemed invalid, which may be represented by $invalid_{message}$. If the message is deemed valid, the message-policy tuple and the signature may be verified against the raw selective verification key via the standard verification algorithm. If the resulting verification, which may be represented by $valid_{skey}/invalid_{skey}$, is valid, the verification algorithm of the selective signature system may verify the inputs as valid. If either of the verifications or the policy-message check is found to be invalid, the verification algorithm of the selective signature system may verify the inputs as invalid.

Thus, for example, the selective signature system may be employed to generate the master secret key and the master verification key. In some embodiments, the computer 106 and/or the wallet 104 may be employed to generate the master secret key and the master verification key. The master secret key may be stored by the wallet 104.

Alternately or additionally, a selective secret key and a selective verification key may be generated. In some embodiments, the computer 106 and/or the wallet 104 may be employed to generate the selective secret key and the selective verification key. The selective verification key may include a policy and a raw selective verification key encrypted using the master secret key. Thus, for example, the selective verification key may indicate authorization of the policy and authorization of the selective keys by the owner of the wallet 104. The raw selective verification key may be associated with the selective secret key.

The selective secret key and the selective verification key may be provided to the device 102. The master secret key may not be provided to the device 102. Alternately, the master secret key may be provided to the device 102. For example, the master secret key may be provided to a device 102 that may be expected to secure the master secret key from theft, such as attempts.

The device 102 may initiate a cryptocurrency transfer, including signing, using the selective secret key, a message initiating the transfer and the policy. The signed message and policy may be provided to the blockchain 108. Alternately or additionally, the master verification key, the raw selective verification key, and/or the selective verification key may be provided to the blockchain 108. The verification keys may be publicly available.

Computers managing the blockchain 108 may verify the signed message and policy. For example, the raw selective verification key and the policy may be extracted from the selective verification key, such as in the manner described above. Alternately or additionally, the signed selective verification key may be verified against the master verification key to verify the validity of the selective verification key. Alternately or additionally, the message may be verified against the policy to verify the validity of the message. Alternately or additionally, the signed message may be verified against the raw verification key to verify the validity of the message. In some embodiments, if a verification indicates that the checked values are invalid, the transaction may not take place. If the verifications indicate that the checked values are valid, the transaction may proceed as indicated by the message.

Thus, for example, should the device 102 be hacked, a hacker may not be able to initiate a transfer to the hacker, as the hacker's account is presumably not approved according to the policy. Furthermore, the hacker may not change the policy without the master secret key. The hacker may have little incentive to hack the device 102, as the hacker may receive little or no benefit from hacking the device 102. Thus, for example, IoT devices may be relatively unattractive targets for hackers, even should the IoT devices be relatively less secure and relatively more susceptible to hacking.

The device 102 may include a processor 110 and a memory 112. The memory 112 may contain a computer readable medium including instructions that, when executed by the processor 110, may cause the device 102 to perform operations such as those described herein. For example, the device may receive the selective secret key and the selective verification key. Alternately or additionally, the device 102 may create the message consistent with the policy and generate the signature. The device 102 may alternately or additionally transmit the signature to the blockchain 108.

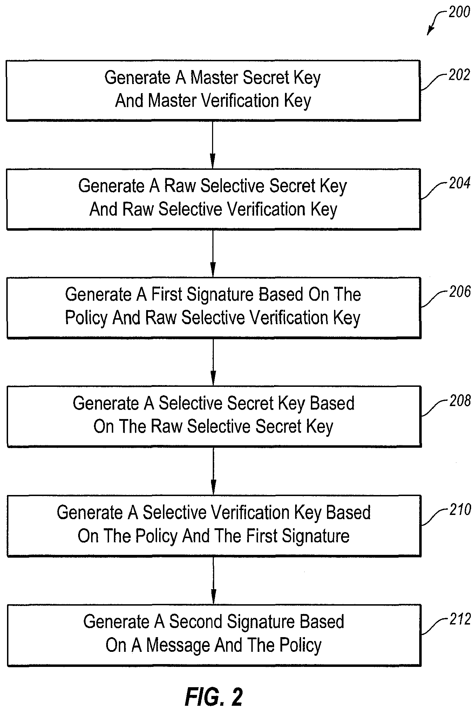

Figure 2 is a flowchart of an example method 200. The method 200 may enable digital currency transfers subject to a policy. The policy may correspond generally to the policy described with reference to Figure 1. The policy may include a relatively small list of preapproved digital currency addresses. The preapproved digital currency addresses may be associated with vendors that sell products related to a device that receives the policy. The method 200 may be performed by the device 102, the wallet 104, the computer 106, and/or computers managing the blockchain 108 of Figure 1.

The method 200 may begin at block 202 by generating a master secret key and a master verification key. The master secret key and the master verification key may correspond generally to the master secret key and the master verification key described with reference to Figure 1. The master verification key may be associated with the master secret key. For example, the master verification key may be used in a verification algorithm to determine whether a signature was generated using the master secret key. In some embodiments, the master secret key and the master verification key may be generated using a key generation algorithm of the digital currency. The key generation algorithm and the verification algorithm may correspond generally to the standard key generation algorithm and the standard verification algorithm described with reference to Figure 1.

The method 200 may continue to block 204 by generating a raw selective secret key and a raw selective verification key. The raw selective secret key and the raw selective verification key may correspond generally to the raw selective secret key and the raw selective verification key discussed with reference to Figure 1. The raw selective verification key may be associated with the raw selective secret key. For example, the raw selective verification key may be used in the verification algorithm to determine whether a signature was generated using the raw selective secret key. In some embodiments, the raw selective secret key and the raw selective verification key may be generated using the key generation algorithm of the digital currency.

The method 200 may continue to block 206 by generating a first signature based on the policy and the raw selective verification key. The first signature may be generated via the master secret key. In some embodiments, the first signature may be generated by a signing algorithm. For example, a tuple of the policy and the raw selective verification key may be encrypted using the master secret key using the signing algorithm. The signing algorithm may correspond generally to the standard key generation algorithm described with reference to Figure 1.

The method 200 may continue to block 208 by generating a selective secret key based on the raw selective secret key. In some embodiments, the selective secret key may be equivalent to the raw selective secret key. For example, the selective secret key and the raw selective secret key may be the same.

The method 200 may continue to block 210 by generating a selective verification key based on the policy and the first signature. In some embodiments, the selective verification key may include a tuple of the policy and the first signature.

The method 200 may continue to block 212 by generating a second signature based on a message and the policy. The message may instruct a digital currency transfer. The digital currency transfer instructed by the message may be consistent with the policy. For example, the message may instruct a digital currency transfer to a digital currency address included in the policy. The second signature may be generated via the selective secret key. In some embodiments, the second signature may be generated by the signing algorithm. For example, a tuple of the message and the policy may be encrypted using the selective secret key using the signing algorithm.

For this and other processes and methods disclosed herein, the functions performed in the processes and methods may be implemented in differing order. Furthermore, the outlined operations are provided only as examples, and some of the operations may be optional, combined into fewer operations, or expanded into additional operations without detracting from the essence of the embodiments.

For example, in some embodiments, the method 200 may further include verifying the first signature via the master verification key. The master verification key may be generally available to entities intending to verify the first signature. For example, the master verification key may be publically available. In some embodiments, first signature may be verified using a verification algorithm of the digital currency system. For example, the verification algorithm may correspond generally to the standard verification algorithm described with reference to Figure 1.

Alternately or additionally, verifying the first signature may include indicating that the first signature is valid or that the first signature is invalid. In some embodiments, in response to the verification indicating that the first signature is invalid, the method 200 may proceed by rejecting the digital currency transfer. Alternately, in response to the verification indicating that the first signature is valid, the method 200 may proceed by verifying that the message is consistent with the policy. For example, a digital currency address of the message may be checked against the digital currency addresses of the policy. If the digital currency address of the message is included in the policy, the method 200 may indicate that the message is valid. Alternately, if the digital currency address of the message is not included in the policy, the method 200 may indicate that the message is invalid. If the message is invalid, the digital currency transfer requested by the message may be rejected.

In some embodiments, if the message is valid, the method 200 may proceed by verifying the second signature via the selective verification key. The selective verification key may be generally available to entities intending to verify the second signature. For example, the selective verification key may be publically available. In some embodiments, the second signature may be verified using the verification algorithm of the digital currency system. Verifying the second signature may include indicating that the second signature is valid or that the second signature is invalid. In some embodiments, in response to the verification indicating that the second signature is invalid, the method 200 may proceed by rejecting the digital currency transfer. Alternately, in response to the verification indicating that the second signature is valid, the method 200 may proceed by accepting the digital currency transfer.

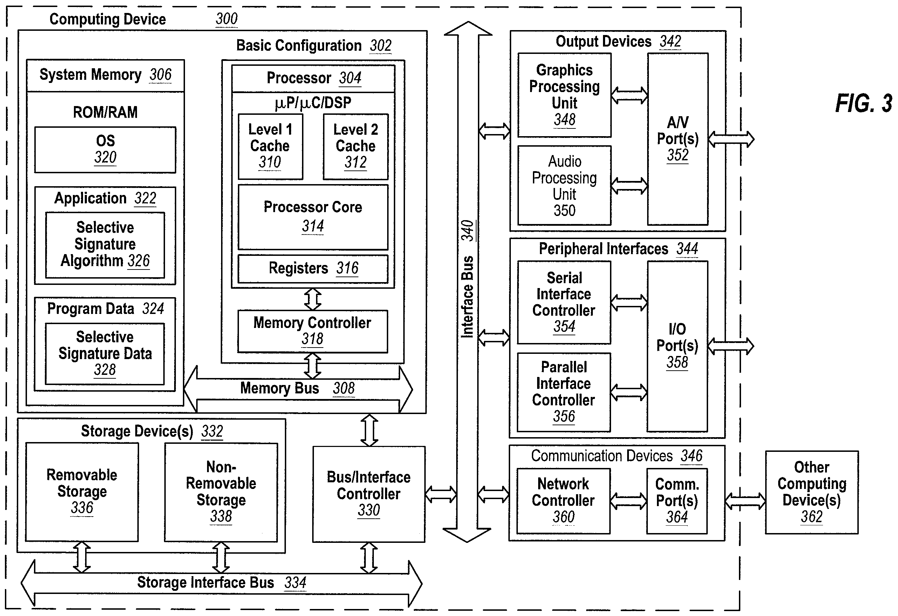

Figure 3 is a block diagram illustrating an example computing device 300. The computing device may be arranged to enable digital currency transfers subject to a policy. The computing device 300 may be one example of an embodiment of the device 102, the wallet 104, the computer 106, and/or computers managing the blockchain 108 of Figure 1. In a configuration 302, the computing device 300 typically includes one or more processors 304 and a system memory 306. The processor 304 and/or the memory 306 may generally correspond to the processor 110 and/or the memory 112 of the device 102 of Figure 1. Alternately or additionally, the processor 304 and/or the memory 306 may generally correspond to processors and/or memory of the wallet 104, the computer 106, and/or computers managing the blockchain 108 of Figure 1. A memory bus 308 may be used for communicating between the processor 304 and the system memory 306.

Depending on the desired configuration, the processor 304 may be of any type including but not limited to a microprocessor ($\mu$P), a microcontroller ($\mu$C), a digital signal processor (DSP), or any combination thereof. The processor 304 may include one more levels of caching, such as a level one cache 310 and a level two cache 312, a processor core 314, and registers 316. An example processor core 314 may include an arithmetic logic unit (ALU), a floating point unit (FPU), a digital signal processing core (DSP Core), or any combination thereof. An example memory controller 318 may also be used with the processor 304, or in some implementations the memory controller 318 may be an internal part of the processor 304.

Depending on the desired configuration, the system memory 306 may be of any type including but not limited to volatile memory, such as Random Access Memory (RAM); non-volatile memory, such as Read Only Memory (ROM), flash memory, etc.; or any combination thereof. The system memory 306 may include an operating system 320, one or more applications 322, and program data 324. The application 322 may include a selective signature algorithm 326 that may be arranged to perform the functions as described herein including those described with respect to the selective signature system described with reference to Figure 1 and the method 200 of Figure 2. The program data 324 may include selective signature data 328 such as the keys, messages, policies, and signatures described with reference to Figure and that may be useful for operation with the selective signature system as is described herein. In some embodiments, the application 322 may be arranged to operate with the program data 324 on the operating system 320 such that a selective signature system may be provided as described herein.

The computing device 300 may have additional features or functionality, and additional interfaces to facilitate communications between the basic configuration 302 and other devices and interfaces. For example, a bus/interface controller 330 may be used to facilitate communications between the basic configuration 302 and one or more data storage devices 332 via a storage interface bus 334. The data storage devices 332 may be removable storage devices 336, non-removable storage devices 338, or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media may include volatile and nonvolatile, removable and non-removable media implemented in any method or technology for storage of information, such as computer readable instructions, data structures, program modules, or other data.

The system memory 306, the removable storage devices 336, and the non-removable storage devices 338 are examples of computer storage media. Computer storage media includes, but is not limited to, RAM, ROM, Electronically Erasable and Programmable Read Only Memory (EEPROM), flash memory or other memory technology, Compact Disc-Read Only Memory (CD-ROM), digital versatile disks (DVD) or other optical storage, magnetic cassettes, magnetic tape, magnetic disk storage or other magnetic storage devices, or any other medium which may be used to store the desired information and which may be accessed by computing device 300. Any such computer storage media may be part of computing device 300.

Computing device 300 may also include an interface bus 340 for facilitating communication from various interface devices (e.g., output devices 342, peripheral interfaces 344, and communication devices 346) to the basic configuration 302 via the bus/interface controller 330. Example output devices 342 include a graphics processing unit 348 and an audio processing unit 350, which may be configured to communicate to various external devices such as a display or speakers via one or more A/V ports 352. Example peripheral interfaces 344 include a serial interface controller 354 or a parallel interface controller 356, which may be configured to communicate with external devices such as input devices (e.g., keyboard, mouse, pen, voice input device, touch input device, etc.) or other peripheral devices (e.g., printer, scanner, etc.) via one or more input/output (I/O) ports 358. An example communication device 346 includes a network controller 360, which may be arranged to facilitate communications with one or more other computing devices 362 over a network communication link via one or more communication ports 364.

The network communication link may be one example of a communication media. Communication media may typically be embodied by computer readable instructions, data structures, program modules, or other data in a modulated data signal, such as a carrier wave or other transport mechanism, and may include any information delivery media. A "modulated data signal" may be a signal that has one or more of its characteristics set or changed in such a manner as to encode information in the signal. By way of example, and not limitation, communication media may include wired media such as a wired network or direct-wired connection, and wireless media such as acoustic, radio frequency (RF), microwave, infrared (IR) and other wireless media. The term computer readable media as used herein may include both storage media and communication media.

The computing device 300 may be implemented as a portion of a small-form factor portable (or mobile) electronic device such as a cell phone, a tablet computer, a smartphone, a smartwatch, smart glasses, a personal data assistant (PDA), a personal media player device, a wireless web-watch device, a personal headset device, an application specific device, or a hybrid device that include any of the above functions. The computing device 300 may also be implemented as a personal computer including both laptop computer and non-laptop computer configurations.

While some of the system and methods described herein are generally described as being implemented in software, specific hardware implementations or a combination of software and specific hardware implementations are also possible and contemplated.

All examples and conditional language recited herein are intended for pedagogical objects to aid the reader in understanding the embodiments and the concepts contributed to furthering the art, and are to be construed as being without limitation to such specifically recited examples and conditions. Although embodiments have been described in detail, it should be understood that the various changes, substitutions, and alterations could be made hereto without departing from the scope of the embodiments.

**Claims**

1. A method of enabling digital currency transfers subject to a policy, the method comprising:

generating, by a computer storing and/or running a cryptocurrency wallet, a master secret key and an associated master verification key, the master verification key being provided to a digital currency system;

generating, by the computer, a raw selective secret key and an associated raw selective verification key;

generating, by the computer, a first signature by encrypting the policy and the raw selective verification key using the master secret key;

generating, by the computer, a selective verification key based on the first signature and the raw selective verification key in which the selective verification key is a tuple of the first signature and the raw selective verification key, the selective verification key being provided to the digital currency system;

providing, by the computer to a device separate from the computer, the raw selective secret key and the policy; and

initiating, by the device, a digital currency transfer including generating a second signature by encrypting a message instructing the digital currency transfer and the policy using the raw selective secret key, the second signature being provided to the digital currency system;

such that the digital currency transfer is subject to the policy in the digital currency system, wherein the digital currency transfer transfers a digital currency associated with the cryptocurrency wallet.

2. The method of claim 1, further comprising verifying the first signature as valid or invalid via the master verification key.

3. The method of claim 2, wherein the verifying the first signature is performed using a verification algorithm of the digital currency system.

4. The method of claim 2, wherein, in response to verifying the first signature as invalid, rejecting the digital currency transfer; or
in response to the verifying the first signature as valid, verifying that the message is consistent with the policy, including indicating that the message is valid or invalid.

5. The method of claim 4, wherein, in response to the verifying that the message is consistent with the policy indicating that the message is invalid, rejecting the digital currency transfer; or
wherein, in response to the verifying that the message is consistent with the policy indicating that the message is valid, verifying the second signature as valid or invalid via the selective verification key.

6. The method of claim 5, wherein the verifying the first signature and the verifying the second signature is performed by a verification algorithm of the digital currency system.

7. The method of claim 5, wherein, in response to the verifying the second signature as invalid, rejecting the digital currency transfer; or
wherein, in response to the verifying the second signature as valid, accepting the digital currency transfer.

8. The method of any preceding claim, wherein the generating the master secret key and the master verification key and the generating the selective secret key and the raw selective verification key are performed using a key generation algorithm of the digital currency system.

9. The method of any preceding claim, wherein the generating the first signature and the generating the second signature are performed using a signing algorithm of the digital currency system.

10. A computer readable medium configured to cause a system to perform operations of requesting digital currency transfers subject to a policy, the operations comprising the method according to any preceding claim.

11. The computer readable medium of claim 10, wherein the policy includes addresses of the digital currency system associated with vendors of products related to a network-connected home appliance included in the system.

12. A system comprising:

a computer (106) configured to store and/or run a cryptocurrency wallet (104) and a device (102) separate from the computer (106), wherein the computer is configured to:

generate a master secret key and an associated master verification key, the master verification key being provided to a digital currency system;
generate a raw selective secret key and an associated raw selective verification key;
generate a first signature by encrypting the policy and the raw selective verification key using the master secret key;
generate a selective verification key based on the first signature and the raw selective verification key in which the selective verification key is a tuple of the first signature and the raw selective verification key, the selective verification key being provided to the digital currency system; and
provide, to the device (102) separate from the computer (106), the raw selective secret key and the policy; and wherein the device (102) is configured to initiate a digital currency transfer including generating a second signature by encrypting a message instructing the digital currency transfer and the policy using the raw selective secret key, the second signature being provided to the digital currency system;

such that the digital currency transfer is subject to the policy in the digital currency system, wherein the digital currency transfer transfers a digital currency associated with the cryptocurrency wallet.

13. The system of claim 12, wherein the device (102) includes a network-connected home appliance.

**Patentansprüche**

1. Verfahren zum Ermöglichen von digitalen Währungstransfers, die einer Richtlinie unterliegen, wobei das Verfahren umfasst:

Generieren, durch einen Computer, der eine Kryptowährungs-Wallet speichert und/oder betreibt, eines geheimen Masterschlüssels und eines zugehörigen Master-Verifizierungsschlüssels, wobei der Master-Verifizierungsschlüssel einem digitalen Währungssystem bereitgestellt wird;

Generieren, durch den Computer, eines rohen selektiven geheimen Schlüssels und eines zugehörigen rohen selektiven Verifizierungsschlüssels;

Generieren, durch den Computer, einer ersten Signatur durch Verschlüsseln der Richtlinie und des rohen selektiven Verifizierungsschlüssels unter Verwendung des geheimen Masterschlüssels;

Generieren, durch den Computer, eines selektiven Verifizierungsschlüssels basierend auf der ersten Signatur und dem rohen selektiven Verifizierungsschlüssel, wobei der selektive Verifizierungsschlüssel ein Tupel der ersten Signatur und des rohen selektiven Verifizierungsschlüssels ist, wobei der selektive Verifizierungsschlüssel dem digitalen Währungssystem bereitgestellt wird;

Bereitstellen, durch den Computer, des rohen selektiven geheimen Schlüssels und der Richtlinie an ein von dem Computer getrenntes Gerät; und

Initiieren, durch das Gerät, eines digitalen Währungstransfers, aufweisend Generieren einer zweiten Signatur durch Verschlüsseln einer Nachricht, die den digitalen Währungstransfer anweist, und der Richtlinie unter Verwendung des rohen selektiven geheimen Schlüssels, wobei die zweite Signatur dem digitale Währungssystem bereitgestellt wird;

so dass der digitale Währungstransfer der Richtlinie in dem digitalen Währungssystem unterliegt, wobei der digitale Währungstransfer eine digitale Währung transferiert, die der Kryptowährungs-Wallet zugeordnet ist.

2. Verfahren nach Anspruch 1, ferner umfassen Verifizieren der ersten Signatur als gültig oder ungültig anhand des Master-Verifizierungsschlüssels.

3. Verfahren nach Anspruch 2, wobei das Verifizieren der ersten Signatur unter Verwendung eines Verifizierungsalgorithmus des digitalen Währungssystems durchgeführt wird.

4. Verfahren nach Anspruch 2, wobei, als Reaktion auf das Verifizieren der ersten Signatur als ungültig, Ablehnen des digitalen Währungstransfers; oder
als Reaktion auf das Verifizieren der ersten Signatur als gültig, Verifizieren, dass die Nachricht mit der Richtlinie übereinstimmt, aufweisend Anzeigen, dass die Nachricht gültig oder ungültig ist.

5. Verfahren nach Anspruch 4, wobei, als Reaktion auf das Verifizieren, dass die Nachricht mit der Richtlinie übereinstimmt, die anzeigt, dass die Nachricht ungültig ist, Ablehnen des digitalen Währungstransfers; oder
wobei, als Reaktion auf das Verifizieren, dass die Nachricht mit der Richtlinie übereinstimmt, die anzeigt, dass die Nachricht gültig ist, Verifizieren der zweiten Signatur als gültig oder ungültig anhand des selektiven Verifizierungsschlüssels.

6. Verfahren nach Anspruch 5, wobei das Verifizieren der ersten Signatur und das Verifizieren der zweiten Signatur durch einen Verifizierungsalgorithmus des digitalen Währungssystems durchgeführt wird.

7. Verfahren nach Anspruch 5, wobei, als Reaktion auf das Verifizieren der zweiten Signatur als ungültig, Ablehnen des digitalen Währungstransfers; oder
wobei, als Reaktion auf das Verifizieren der zweiten Signatur als gültig, Akzeptieren des digitalen Währungstransfers.

8. Verfahren nach einem der vorhergehenden Ansprüche, wobei das Generieren des geheimen Masterschlüssels und des Master-Verifizierungsschlüssels und das Generieren des selektiven geheimen Schlüssels und des rohen selektiven Verifizierungsschlüssels unter Verwendung eines Schlüsselerzeugungsalgorithmus des digitalen Währungssystems durchgeführt werden.

9. Verfahren nach einem der vorhergehenden Ansprüche, wobei das Generieren der ersten Signatur und das Generieren der zweiten Signatur unter Verwendung eines Signaturalgorithmus des digitalen Währungssystems durchgeführt werden.

10. Computerlesbares Medium, das dazu ausgelegt ist, ein System zu veranlassen, Operationen zum Anfordern von digitalen Währungstransfers, die einer Richtlinie unterliegen, durchzuführen, wobei die Operationen das Verfahren nach einem der vorhergehenden Ansprüche umfassen.

11. Computerlesbares Medium nach Anspruch 10, wobei die Richtlinie Adressen des digitalen Währungssystems aufweisen, die Verkäufern von Produkten zugeordnet sind, die sich auf ein netzwerkverbundenes Haushaltsgerät beziehen, das in dem System enthalten ist.

**12.** System, umfassend:

einen Computer (106), der dazu ausgelegt ist, eine Kryptowährungs-Wallet (104) zu speichern und/oder auszuführen, und ein Gerät (102), das von dem Computer (106) getrennt ist, wobei der Computer ausgelegt ist zum:

Generieren eines geheimen Masterschlüssels und eines zugehörigen Master-Verifizierungsschlüssels, wobei der Master-Verifizierungsschlüssel einem digitalen Währungssystem bereitgestellt wird;
Generieren eines rohen selektiven geheimen Schlüssel und eines zugehörigen rohen selektiven Verifizierungsschlüssels;
Generieren einer ersten Signatur durch Verschlüsseln der Richtlinie und des rohen selektiven Verifizierungsschlüssels unter Verwendung des geheimen Masterschlüssels;
Generieren eines selektiven Verifizierungsschlüssel basierend auf der ersten Signatur und dem rohen selektiven Verifizierungsschlüssel, wobei der selektive Verifizierungsschlüssel ein Tupel der ersten Signatur und des rohen selektiven Verifizierungsschlüssels ist, wobei der selektive Verifizierungsschlüssel dem digitalen Währungssystem bereitgestellt wird; und
Bereitzustellen des rohen selektiven geheimen Schlüssels und der Richtlinie an das von dem Computer (106) getrennte Gerät (102); und

wobei das Gerät (102) dazu ausgelegt ist, einen digitalen Währungstransfer zu initiieren, aufweisen Generieren einer zweiten Signatur durch Verschlüsseln einer Nachricht, die den digitalen Währungstransfer anweist, und der Richtlinie unter Verwendung des rohen selektiven geheimen Schlüssels, wobei die zweite Signatur dem digitalen Währungssystem bereitgestellt wird;
so dass der digitale Währungstransfer der Richtlinie in dem digitalen Währungssystem unterliegt, wobei der digitale Währungstransfer eine digitale Währung transferiert, die dem Kryptowährungs-Wallet zugeordnet ist.

**13.** System nach Anspruch 12, wobei das Gerät (102) ein netzwerkverbundenes Haushaltsgerät aufweist.

## Revendications

**1.** Un procédé pour permettre des transferts de monnaie numérique soumis à une politique, le procédé comprenant :

la génération, par un ordinateur stockant et / ou exécutant un portefeuille de crypto-monnaie, d'une clé secrète maîtresse et d'une clé de vérification maîtresse associée, la clé de vérification maîtresse étant fournie à un système de monnaie numérique ;
la génération, par l'ordinateur, d'une clé secrète sélective brute et d'une clé de vérification sélective brute associée ;
la génération, par l'ordinateur, d'une première signature en cryptant la politique et la clé de vérification sélective brute en utilisant la clé secrète maîtresse ;
la génération, par l'ordinateur, d'une clé de vérification sélective basée sur la première signature et la clé de vérification sélective brute dans laquelle la clé de vérification sélective est un tuple de la première signature et de la clé de vérification sélective brute, la clé de vérification sélective étant fournie au système de monnaie numérique ;
la fourniture, par l'ordinateur à un dispositif séparé de l'ordinateur, de la clé secrète sélective brute et de la politique ; et
l'initiation, par le dispositif, d'un transfert de monnaie numérique comprenant la génération d'une deuxième signature en cryptant un message ordonnant le transfert de monnaie numérique et la politique en utilisant la clé secrète sélective brute, la deuxième signature étant fournie au système de monnaie numérique ;
de sorte que le transfert de monnaie numérique est soumis à la politique dans le système de monnaie numérique, dans lequel le transfert de monnaie numérique transfère une monnaie numérique associée au portefeuille de crypto-monnaie.

**2.** Le procédé selon la revendication 1, comprenant en outre la vérification de la première signature étant valide ou invalide via la clé de vérification maîtresse.

**3.** Le procédé selon la revendication 2, dans lequel la vérification de la première signature est effectuée en utilisant un algorithme de vérification du système de monnaie numérique.

**4.** Le procédé selon la revendication 2, dans lequel, en réponse à la vérification de la première signature comme étant invalide, le rejet du transfert de monnaie numérique ; ou
en réponse à la vérification de la première signature comme étant valide, la vérification que le message est conforme à la politique, y compris l'indication que le message est valide ou invalide.

**5.** Le procédé selon la revendication 4, dans lequel, en réponse à la vérification que le message est conforme à la politique indiquant que le message est invalide, le rejet du transfert de monnaie numérique ; ou
dans lequel, en réponse à la vérification que le message est conforme à la politique indiquant que le message est valide, la vérification de la deuxième signature comme valide ou invalide via la clé de vérification sélective.

**6.** Le procédé selon la revendication 5, dans lequel la vérification de la première signature et la vérification de la deuxième signature sont effectuées par un algorithme de vérification du système de monnaie numérique.

**7.** Le procédé selon la revendication 5, dans lequel, en réponse à la vérification de la deuxième signature comme étant invalide, le rejet du transfert de monnaie numérique ; ou
dans lequel, en réponse à la vérification de la deuxième signature comme étant valide, l'acceptation du transfert de monnaie numérique.

**8.** Le procédé selon l'une quelconque des revendications précédentes, dans lequel la génération de la clé secrète maîtresse et de la clé de vérification maîtresse et la génération de la clé secrète sélective et de la clé de vérification sélective brute sont effectuées en utilisant un algorithme de génération de clé du système de monnaie numérique.

**9.** Le procédé selon l'une quelconque des revendications précédentes, dans lequel la génération de la première signature et la génération de la deuxième signature sont effectuées en utilisant un algorithme de signature du système de monnaie numérique.

**10.** Un support lisible par ordinateur configuré pour amener un système à effectuer des opérations de demande de transferts de monnaie numérique soumis à une politique, les opérations comprenant le procédé selon l'une quelconque des revendications précédentes.

**11.** Le support lisible par ordinateur selon la revendication 10, dans lequel la politique comprend des adresses du système de monnaie numérique associées à des fournisseurs de produits liés à un appareil domestique connecté au réseau inclus dans le système.

**12.** Un système comprenant :

un ordinateur (106) configuré pour stocker et / ou exécuter un portefeuille de crypto-monnaie (104) et un dispositif (102) séparé de l'ordinateur (106), dans lequel l'ordinateur est configuré pour :

générer une clé secrète maîtresse et une clé de vérification maîtresse associée, la clé de vérification maîtresse étant fournie à un système de monnaie numérique ;
générer une clé secrète sélective brute et une clé de vérification sélective brute associée ;
générer une première signature en cryptant la politique et la clé de vérification sélective brute en utilisant la clé secrète maîtresse ;
générer une clé de vérification sélective basée sur la première signature et la clé de vérification sélective brute dans laquelle la clé de vérification sélective est un tuple de la première signature et de la clé de vérification sélective brute, la clé de vérification sélective étant fournie au système de monnaie numérique ; et
fournir, au dispositif (102) séparé de l'ordinateur (106), la clé secrète sélective brute et la politique ; et

dans lequel le dispositif (102) est configuré pour initier un transfert de monnaie numérique comprenant la génération d'une deuxième signature en cryptant un message ordonnant le transfert de monnaie numérique et la politique en utilisant la clé secrète sélective brute, la deuxième signature étant fournie au système de monnaie numérique ;
de sorte que le transfert de monnaie numérique est soumis à la politique dans le système de monnaie numérique, dans lequel le transfert de monnaie numérique transfère une monnaie numérique associée au portefeuille de crypto-monnaie.

13. Le système selon la revendication 12, dans lequel le dispositif (102) comprend un appareil domestique connecté au réseau.

*FIG. 1*

EP 3 309 996 B1

*FIG. 2*

**Computing Device** *300*

**Basic Configuration** *302*

**System Memory** *306*

**ROM/RAM**

**OS**
*320*

**Application** *322*

**Selective Signature Algorithm** *326*

**Program Data** *324*

**Selective Signature Data** *328*

**Processor** *304*

μP/μC/DSP

**Level 1 Cache** *310*

**Level 2 Cache** *312*

**Processor Core** *314*

**Registers** *316*

**Memory Controller** *318*

**Memory Bus** *308*

**Storage Device(s)** *332*

**Removable Storage** *336*

**Non-Removable Storage** *338*

**Bus/Interface Controller** *330*

**Interface Bus** *340*

**Output Devices** *342*

**Graphics Processing Unit** *348*

**Audio Processing Unit** 350

**A/V Port(s)** *352*

**Peripheral Interfaces** *344*

**Serial Interface Controller** *354*

**Parallel Interface Controller** *356*

**I/O Port(s)** *358*

**Communication Devices** *346*

**Network Controller** *360*

**Comm. Port(s)** *364*

**Other Computing Device(s)** *362*

**Storage Interface Bus** *334*

*FIG. 3*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015324787 A1